# FASCICULE DE BREVET EUROPEEN

(11) **EP 0 378 454 B1**
(45) Date de publication et mention de la délivrance du brevet: **29.09.1993**
(21) Numéro de dépôt: 90400027.0
(22) Date de dépôt: 04.01.1990
(51) Int. Cl.: G07F 7/08, G07F 7/02

(54) **Carte à mémoire prépayée rechargeable**
Vorausbezahlte wiederaufladbare Speicherkarte
Prepaid rechargeable memory card

(30) Priorité: 11.01.1989 FR 8900256
(43) Date de publication de la demande: 18.07.1990
(73) Titulaire: GEMPLUS CARD INTERNATIONAL, F-13420 Gémenos (FR); LA POSTE, F-75700 Paris (FR); FRANCE TELECOM, 92131 ISSY LES MOULINEAUX (FR)
(72) Inventeur: Maes, Philippe, F-75116 Paris (FR); Depret, Eric, F-75116 Paris (FR); Hiolle, Philippe, F-75116 Paris (FR)
(74) Mandataire: Schmit, Christian Norbert Marie

(56) Documents cités:
- EP-A- 0 292 658
- DE-A- 3 432 557
- FR-A- 2 503 423
- FR-A- 2 522 850
- US-A- 4 680 736

## Description

L'invention concerne les cartes à mémoire, et plus particulièrement celles qui sont utilisées comme moyen de prépaiement dans des installations de distribution de produits ou de services.

Un exemple typique de carte à mémoire à laquelle la présente invention peut s'appliquer est la carte téléphonique prépayée, que l'on achète pour une certaine valeur monétaire; cette valeur est mémorisée directement ou indirectement dans la carte et est décrémentée au fur et à mesure de son utilisation. L'invention s'applique cependant également dans d'autres situations où des unités de compte sont enregistrées dans la carte et sont décrémentées ou incrémentées au fur et à mesure de l'utilisation; ces unités peuvent avoir une valeur monétaire ou non. Dans la suite de la description, on utilisera systématiquement l'exemple de la carte téléphonique prépayée car c'est l'exemple le plus parlant pour exposer les avantages de l'invention.

Dans une réalisation précédente de carte prépayée, on utilise comme moyen de stockage de la valeur marchande prépayée une mémoire non-volatile électriquement programmable et non effaçable électriquement.

Dans cette réalisation, la mémoire non-volatile électriquement programmable (mémoire EPROM) contient P cellules de mémoire; chaque cellule correspond à une unité de compte élémentaire de la valeur marchande. Les cellules sont initialement vierges; lors de l'utilisation, un lecteur de cartes associé à la distribution de produits ou services fournit des impulsions successives de programmation des P cellules les unes après les autres, au fur et à mesure de la distribution. La valeur résiduelle de la carte correspond au nombre de cellules non encore programmées. Lorsque toutes les cellules sont programmées, le crédit prépayé est épuisé.

Dans une autre réalisation, la mémoire est électriquement effaçable (mémoire EEPROM). On s'intéressera plus spécialement à ce dernier exemple qui met mieux en lumière les avantages de l'invention. La mémoire comporte P cellules correspondant chacune à une unité de compte. Il est prévu en outre un compteur, un registre contenant un nombre figé Z correspondant à une valeur marchande globale ZxP de la carte exprimée en unités de compte, et un comparateur pour comparer le contenu du compteur et celui du registre. Lorsque les P cellules de la mémoire ont été programmées, le compteur est incrémenté d'une unité, et les cellules sont toutes effacées simultanément, puis programmées à nouveau successivement les unes après les autres. Le contenu du compteur s'incrémente après chaque consommation de P unités de compte. Lorsque le contenu du compteur atteint la valeur spécifiée dans le registre, le comparateur délivre un signal de fin de crédit qui interdit de continuer à utiliser la carte. Ainsi, grâce au fait que la mémoire est effaçable électriquement, on a réalisé une carte dont la valeur créditée est ZxP bien que la mémoire n'ait que P cellules.

Bien entendu, le compteur est incrémenté par un circuit intérieur à la carte; il n'est pas accessible sur les bornes extérieures de la carte, car une fraude serait alors possible.

Dans la pratique, on peut imaginer par exemple que les cartes comprennent une mémoire de 50 cellules (P = 50), et on vend dans le commerce des cartes de 50, 100, 150, etc. unités de compte.

Le caractère effaçable de la mémoire est utilisé pour conserver un nombre limité de cellules de mémoire (P cellules) tout en ayant de larges possibilités de choix de la valeur marchande de la carte (PxZ). Le fabricant du circuit-intégré de la carte n'aura qu'un seul circuit à concevoir, et la seule chose qu'il devra faire pour attribuer une valeur marchande ou une autre à la carte sera de programmer différemment le contenu d'un registre (en pratique une mémoire morte) définissant le nombre Z.

On connaît par ailleurs (brevet FR-A-2 503 423) des systèmes de cartes rechargeables, dans lesquelles les P cellules de la mémoire sont effacées après avoir été toutes programmées, ces systèmes nécessitant cependant des moyens de sécurité anti-fraude pour empêcher des rechargements frauduleux. On connaît aussi (brevet DE A 34 32 557) des systèmes rechargeables un nombre limité de fois, utilisant un compteur de nombre de rechargements successifs.

La présente invention propose principalement d'utiliser le caractère effaçable de la mémoire pour rendre la carte rechargeable, c'est-à-dire pour que l'utilisateur qui a épuisé son crédit puisse aller acheter une quantité supplémentaire d'unités de compte sans changer de carte.

Un autre but de la présente invention est de permettre que lorsque la carte ne contient plus qu'un petit nombre d'unités de compte, ces unités ne soient pas perdues pour l'utilisateur, y compris lorsqu'il fait recharger cette carte.

Selon l'invention, on propose une carte à mémoire servant de moyen de comptage d'unités, organisée pour compter jusqu'à NxP unités organisées en N pages de P unités chacune, la carte comportant une zone de mémoire dont chaque cellule représente une unité de compte, la programmation de cette cellule dans un état donné représentant le comptage d'une unité, la carte comprenant un compteur de pages et un circuit d'incrémentation interne à la carte pour incrémenter le compteur de pages d'une unité après chaque programmation complète d'une page de P cellules caractérisée en ce qu'elle comporte un compteur de consigne dont le contenu représente un crédit global de Z pages d'unités, et un comparateur pour émettre un signal de fin de crédit lorsque le contenu du compteur de pages atteint celui du compteur de consigne, ce qui signifie que ledit comparateur émet ledit signal de fin de crédit lorsque le compteur de pages indique que Z pages ont été consommées, le compteur de consigne étant agencé pour être incrémenté à partir de l'extérieur de la carte.

Au lieu que le fabricant ait à fabriquer des cartes différentes en fonction de la valeur marchande de celle-ci, une seule carte pourra être fabriquée, et c'est par le chargement initial et les rechargements ultérieurs de la carte que la valeur de crédit sera enregistrée dans la carte.

Cette solution est applicable principalement si la mémoire est effaçable électriquement; c'est là que l'invention prend toute sa valeur car elle utilise au mieux le caractère effaçable de la mémoire; mais la solution est applicable aussi si la mémoire n'est pas effaçable, la zone de mémoire contenant alors N pages de P cellules; le compteur de pages est incrémenté à chaque consommation d'une page complète, et les rechargements consistent à incrémenter le compteur de consigne pour augmenter le nombre de pages de P cellules qui peuvent être programmées, la limite des incrémentations successives étant atteinte lorsque le contenu du compteur de consigne atteint la valeur N.

Dans le cas plus intéressant d'une mémoire effaçable, la zone de mémoire contient P cellules, c'est-à-dire qu'elle correspond à une seule page d'unités de compte. Lorsque les P cellules de la carte ont été programmées, un signal d'incrémentation du compteur de pages est délivré (ce signal est établi à l'intérieur de la carte), et les P cellules sont effacées; la programmation successive des P cellules peut alors recommencer. Lorsque le contenu du compteur de pages atteint celui du compteur de consigne, un signal de fin de crédit est émis, invalidant le fonctionnement ultérieur de la carte et interdisant par exemple l'effacement des P cellules.

La carte peut alors être rechargée par incrémentation du compteur de consigne, dans la limite de la capacité de comptage de celui-ci. Mais la carte peut aussi être rechargée avant que le signal de fin de crédit ne soit émis; s'il reste des unités de compte disponibles dans la mémoire, elles ne seront pas perdues puisque le rechargement agit sur le compteur de consigne et pas sur la programmation des cellules de mémoire.

De préférence, le compteur de pages et également le compteur de consigne sont strictement irréversibles, c'est-à-dire que non seulement ils ne comptent que dans un sens, mais encore ils ne reviennent pas à zéro lorsqu'ils ont atteint leur capacité de comptage maximale.

Dès lors que le compteur de consigne est accessible à partir des bornes de connexion extérieures de la carte, il est très souhaitable, et parfois indispensable, de prévoir une sécurité d'accès à ce compteur pour éviter une fraude. L'invention propose un système d'exploitation de cartes avec une sécurité particulièrement simple, sous forme de deux registres dans la carte. Le premier registre, registre d'identification, contient un numéro d'identification de la carte, par exemple un numéro de série inscrit dès l'origine dans la carte; ce numéro est accessible en lecture mais son contenu n'est en principe pas modifiable; le registre peut être constitué à partir d'une mémoire morte ou d'une mémoire électriquement programmable à grille flottante. Le deuxième registre contient un code de validation qui est le résultat d'un algorithme de calcul faisant intervenir à la fois le contenu du premier registre et le contenu du compteur de consigne. Le calcul du code de validation est fait par la machine de rechargement de la carte qui lit le numéro de série de la carte, qui lit ou qui connaît le nouveau contenu du compteur de consigne, et qui écrit le résultat de l'algorithme sous forme d'un code de validation dans le deuxième registre. La vérification du code de validation est faite dans le lecteur de cartes au moment de l'utilisation de la carte: le lecteur lit le numéro de série, le contenu du compteur de crédit et le contenu du registre de validation. Il vérifie qu'il y a compatibilité entre ces trois contenus compte-tenu de l'algorithme de codage utilisé.

Parmi les avantages de l'invention, on notera que la carte est compatible avec les cartes non rechargeables telles que décrites ci-dessus : il sera facile de prévoir que les applications futures fonctionnent indifféremment avec des cartes rechargeables ou non rechargeables.

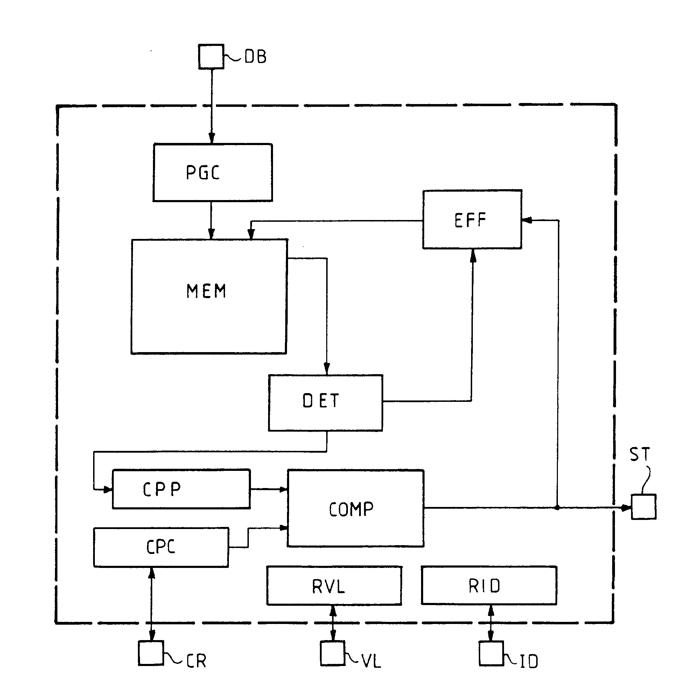

D'autres caractéristiques et avantages de l'invention apparaîtront à la lecture de la description détaillée qui suit et qui est faite en référence aux dessins annexés dans lesquels la figure unique représente schématiquement le circuit-intégré de la carte à mémoire selon l'invention.

La figure représente l'architecture du circuit-intégré de la carte à mémoire rechargeable selon l'invention. Sur cette figure ne sont représentés que les parties spécifiquement concernées par l'invention; ne sont notamment pas représentés les circuits qui gèrent les transmissions de signaux entre la carte et le lecteur de cartes ou entre la carte et l'appareil de rechargement d'unités de compte.

On notera par ailleurs que diverses bornes d'entrée ou de sortie de signaux ont été représentées sur la figure. Toutefois, certaines bornes représentées comme des bornes physiquement ou électriquement séparées pourraient être regroupées dans la réalisation pratique; en effet, il est important de minimiser le nombre de bornes d'entrée/sortie de la carte, et il est fréquent de prévoir des multiplexages de signaux différents sur des bornes communes pour réaliser cet objectif.

L'exemple de la figure correspond à une carte téléphonique prépayée, rechargeable, utilisant une mémoire électriquement effaçable et électriquement programmable (mémoire EEPROM).

Le circuit-intégré comporte une zone de mémoire EEPROM désignée par la référence MEM. Cette zone comporte P cellules correspondant chacune à une unité de compte. La mémoire peut être constituée sous forme de matrice avec décodeurs d'adressage en lignes et/ou colonnes, ou encore sous forme de registres, par exemple de registres à décalage, etc.

On a représenté sur la figure une borne DB d'accès de la carte, par laquelle arrivent des impulsions de débit; ces impulsions sont issues, lors de l'utilisation de la carte dans une cabine téléphonique publique, de la ligne téléphonique elle-même. Chaque impulsion a pour effet de programmer une cellule de la mémoire MEM, et l'adresse de la cellule à programmer est incrémentée à chaque impulsion pour que l'on programme successivement toutes les cellules non encore programmées de la mémoire. Les circuits de programmation de cartes à mémoire à prépaiement sont connus et ne seront pas décrits plus en détail. On a simplement indiqué sur la figure la présence d'un circuit de programmation PGC entre la borne DB et la mémoire MEM.

Un circuit DET de détection de la fin de programmation de la mémoire MEM est prévu; il fournit un signal lorsque la dernière cellule (P^{ième} cellule) est programmée. Un circuit EFF d'effacement global de toute la mémoire MEM est également prévu; il efface les P cellules de la mémoire lorsqu'il en reçoit l'ordre du circuit de détection de fin de programmation d'une page complète de P unités.

On remarque encore sur la figure deux compteurs CPP et CPC et un comparateur COMP pour comparer le contenu des deux compteurs.

Les compteurs sont irréversibles: ils ne comptent que dans un sens (par exemple incrémentation seulement) et ils ne reviennent pas à zéro ou à un contenu antérieur lorsqu'ils arrivent au maximum de leur capacité. Ils peuvent compter en mode binaire ou BCD ou tout autre mode.

Le premier compteur, CPP, est le compteur de pages d'unités de compte consommées; il est incrémenté par le circuit de détection DET (c'est-à-dire par un circuit interne à la carte) après chaque programmation d'une page complète d'unités de compte.

Le deuxième compteur, CPC, est le compteur de consigne ou compteur de crédit. Son contenu est chargé par l'extérieur de la carte, plus précisément par une machine de rechargement de crédit. C'est pourquoi on a représenté une liaison entre le compteur de crédit CPC et une borne extérieure de rechargement CR. Comme on l'a dit ci-dessus, cette borne est représentée comme une borne autonome, mais elle pourrait être confondue avec une autre, par exemple avec la borne DB puisque le rechargement de crédit ne se fera pas au cours de l'utilisation dans une cabine téléphonique.

On peut supposer que le contenu initial chargé dans le compteur CPC est Z; c'est le contenu en sortie d'usine ou après un passage initial dans une machine de rechargement de crédit. Le contenu initial du compteur de pages CPP est zéro. Lors de l'utilisation de la carte, les cellules de la mémoire M seront programmées une à une en fonction de la consommation d'unités téléphoniques (déterminée par la réception des impulsions de débit sur la borne DB). Lorsque les P cellules ont été programmées, le compteur CPP est incrémenté d'une unité et la mémoire est complètement effacée. Et ainsi de suite, jusqu'à ce que le compteur de pages CPP atteigne la valeur Z enregistrée dans le compteur de consigne CPC. Le comparateur COMP émet alors un signal de fin de crédit sur une borne extérieure ST de la carte. Ce signal arrête par exemple la communication téléphonique ou exerce tout autre action, y compris sur le fonctionnement interne de la carte. Il peut en particulier inhiber l'effacement de la mémoire, effacement qui devrait avoir lieu au moment où le compteur CPP atteint la valeur Z.

Si la carte est alors introduite dans une machine de rechargement de crédit, cette machine peut incrémenter le compteur de M unités, par exemple jusqu'à une valeur Y = Z+M. L'utilisateur paye pour cette incrémentation, par exemple proportionnellement à cette incrémentation, ou avec un tarif dégressif. Il dispose alors d'un nouveau crédit de (Y-Z)P unités de compte. Le fonctionnement de la carte est alors exactement le même que précédemment.

La carte n'est plus rechargeable lorsque le compteur de consigne à atteint sa capacité maximale N.

Le rechargement de la carte peut se faire comme on l'a dit même lorsque le crédit n'est pas épuisé, par exemple lorsque le compteur de pages marque un contenu Z′ inférieur au contenu du compteur de consigne et lorsque seule une partie P′ des P cellules de la mémoire a été programmée. Le crédit restant (Z-Z′-1)P + P-P′ reste utilisable et la carte rechargée jusqu'à une consigne Y comporte un crédit global (Y-Z′)P - P′ quel que soit Z′ et P′.

On a encore représenté sur la figure deux registres servant à assurer la sécurité des rechargements de la carte dans le cas où le circuit-intégré de la carte est un circuit simple de logique câblée n'utilisant pas de microprocesseur qui pourrait assurer cette sécurité.

Le premier registre, RID, est un registre d'identification de la carte. Il peut comprendre par exemple un numéro de série de la carte, ou un numéro de lot, ou un numéro de code quelconque fixe. Plus le code d'identification est propre à la carte plus la sécurité est assurée; en d'autres termes, la sécurité est très élevée si deux cartes distinctes n'ont pratiquement aucune chance d'avoir le même code. Ce premier registre RID est par exemple réalisé sous forme d'une mémoire morte (ROM) ou un registre électriquement programmable à grille flottante. Il est accessible en lecture à partir d'une borne extérieure ID, de manière que le lecteur de carte en utilisation ou la machine de rechargement de crédit puissent lire le code qu'il contient.

Le deuxième registre, RVL, est un registre de validation. Il contient un code de validation permettant de vérifier l'absence de fraude. Il est accessible en lecture par le lecteur de cartes ou la machine de rechargement de crédit. Il est accessible en écriture par la machine de rechargement de crédit seule. Une borne d'accès extérieur VL a été représentée; ce pourrait être la même borne que la borne ID avec un multiplexage de signaux approprié. Le registre est constitué par une mémoire électriquement effaçable et reprogrammable.

Le procédé de validation est le suivant : lors du rechargement de la carte, la machine de rechargement lit le contenu Z du compteur de consigne. Elle incrémente le compteur jusqu'à la nouvelle valeur de consigne Y désirée. A partir du nouveau contenu et du code d'identification lu dans le registre RID, elle établit un code de validation selon un algorithme bien défini. Ce code est inscrit dans le registre de validation RVL.

Lors de l'utilisation dans un lecteur de carte associé à une machine de distribution de services (cabine téléphonique), le lecteur commence par lire sur les bornes CR, VL, ID, le contenu du compteur de consigne, et des registres d'identification et de validation. Il vérifie que ces trois contenus sont compatibles compte-tenu de l'algorithme utilisé par la machine de rechargement. Par exemple, il refait l'algorithme inverse à partir du contenu du registre de validation, ou il refait le même algorithme que la machine de rechargement et vérifie que le résultat du calcul coïncide avec le contenu du registre de validation RVL.

S'il n'y a pas compatibilité entre les contenus des deux registres et du compteur, le lecteur de cartes interdit la distribution du service ou produit demandé par l'utilisateur; il peut aussi empêcher la restitution de la carte à l'utilisateur.

La vérification du registre de validation n'implique pas nécessairement l'exécution de l'algorithme de départ ou de l'algorithme inverse; elle peut dans certains cas se limiter à une vérification plus sommaire de calculs de parités, etc.

Les codes d'identification et de validation ne sont pas nécessairement contenus dans des registres directement connectés à des bornes extérieures du circuit-intégré. Ils peuvent être contenus dans des zones spécifiques de la mémoire MEM, ces zones étant accessibles à travers un décodeur d'adresse. La vérification de la carte passe alors par un adressage de ces zones spécifiques de la mémoire MEM puisque ce sont ces zones qui ont la fonction des registres de validation RVL et d'identification RID.

L'invention permettra notamment de réaliser facilement des cartes téléphoniques de forte capacité pour les gens qui ont beaucoup besoin d'utiliser des cabines téléphoniques publiques pour des communications à longue distance.

## Revendications

1. Carte à mémoire servant de moyen de comptage d'unités, organisée pour compter jusqu'à NxP unités organisées en N pages de P unités chacune, la carte comportant une zone de mémoire (MEM) dont chaque cellule représente une unité de compte, la programmation de cette cellule dans un état donné représentant le comptage d'une unité, la carte comprenant un compteur de pages (CPP) et un circuit d'incrémentation (DET) interne à la carte pour incrémenter le compteur de pages d'une unité après chaque programmation complète d'une page de P cellules caractérisée en ce qu'elle comporte un compteur de consigne (CPC) dont le contenu représente un crédit global de Z pages d'unités, et un comparateur (COMP) pour émettre un signal de fin de crédit lorsque le contenu du compteur de pages atteint celui du compteur de consigne, ce qui signifie que ledit comparateur émet ledit signal de fin de crédit lorsque le compteur de pages indique que Z pages ont été consommées, le compteur de consigne étant agencé pour être incrémenté à partir de l'extérieur de la carte.

2. Carte à mémoire selon la revendication 1, caractérisée en ce que la zone de mémoire (MEM) est effaçable électriquement et comprend une seule page de P cellules et en ce qu'il est prévu dans la carte un circuit d'effacement (EFF) pour effacer la programmation des P cellules lorsque les P cellules ont été programmées, et pour incrémenter alors le compteur de pages, la programmation des cellules pouvant alors recommencer.

3. Carte à mémoire selon la revendication 2, caractérisée en ce que le signal de fin de crédit est transmis à l'extérieur de la carte et en ce qu'il est également utilisé pour interdire l'effacement des cellules programmées.

4. Carte à mémoire selon l'une des revendications 1 à 3, caractérisée en ce que le compteur de pages et le compteur de consigne sont irréversibles, leur contenu ne pouvant revenir à un contenu antérieur ou à zéro même lorsque leur capacité maximale a été atteinte.

5. Carte à mémoire selon l'une des revendications 1 à 4, caractérisée en ce qu'elle comporte un registre d'identification (RID) contenant un numéro d'identification de la carte, et un registre de validation (RVL) contenant un code de validation qui est le résultat d'un algorithme de calcul faisant intervenir à la fois le contenu du premier registre et le contenu du compteur de consigne, le registre de validation étant lisible et inscriptible à partir de l'extérieur de la carte.

6. Système d'exploitation d'une carte à mémoire selon la revendication 5, comportant des cartes à mémoire, des lecteurs de cartes associés à des installations de distribution de produits ou services, et des machines de rechargement de crédit pour les cartes, caractérisé en ce que :
- les machines de rechargement de cartes comportent des moyens pour incrémenter le contenu du compteur de consigne de la carte, d'une quantité M telle que Z+M reste inférieur ou égal à N où N représente la capacité maximale du compteur de consigne,
- les machines de rechargement comportent des moyens pour lire le contenu du registre d'identification de la carte, pour effectuer un algorithme de validation à partir du contenu du registre d'identification et du nouveau contenu Z+M du compteur de consigne, et pour inscrire le résultat de l'algorithme dans le registre de validation de la carte,
- les lecteurs de carte comportent des moyens pour lire le contenu du compteur de consigne, du registre de validation, et du registre d'identification, pour vérifier la compatibilité de ces trois contenus en fonction de l'algorithme de validation utilisé, et pour interdire l'utilisation de la carte si une incompatibilité est détectée.

## Patentansprüche

1. Speicherkarte, die als Mittel zum Zählen von Einheiten dient, organisiert zum Zählen von bis zu NxP Einheiten, die in N Seiten mit jeweils P Einheiten organisiert sind, wobei die Karte eine Speicherzone (MEM) umfaßt, bei der jede Zelle eine Zähleinheit darstellt, wobei die Programmierung dieser Zelle in einem gegebenen Zustand die Zählung einer Einheit darstellt, wobei die Karte einen Seitenzähler (CPP) und einen Inkrementierungskreis (DET) innerhalb der Karte umfaßt, um den Seitenzähler nach jeder vollständigen Programmierung einer Seite mit P Zellen um eine Einheit zu inkrementieren, dadurch **gekennzeichnet**, daß sie einen Anweisungszähler (CPC), dessen Inhalt einen Gesamtkredit von Z Einheitenseiten darstellt, und einen Komparator (COMP) zur Ausgabe eines Kreditend-Signals umfaßt, wenn der Inhalt des Seitenzählers den des Anweisungszählers erreicht, was bedeutet, daß der Komparator das Kreditend-Signal ausgibt, wenn der Seitenzähler anzeigt, daß Z Seiten verbraucht sind, wobei der Anweisungszähler angeordnet ist, um von außerhalb der Karte inkrementiert zu werden.

2. Speicherkarte nach Anspruch 1, dadurch **gekennzeichnet**, daß die Speicherzone (MEM) elektrisch löschbar ist und eine einzelne Seite mit P Zellen umfaßt und daß in der Karte ein Löschkreis (EFF) vorgesehen ist, um die Programmierung der P Zellen zu löschen, wenn die P Zellen programmiert worden sind, und um daraufhin den Seitenzähler zu inkrementieren, wobei dann die Programmierung der Zellen von neuem beginnen kann.

3. Speicherkarte nach Anspruch 2, dadurch **gekennzeichnet**, daß das Kreditend-Signal nach außerhalb der Karte übertragen wird und daß es ebenfalls verwendet wird, um die Löschung der programmierten Zellen zu sperren.

4. Speicherkarte nach einem der Ansprüche 1 bis 3, dadurch **gekennzeichnet**, daß der Seitenzähler und der Anweisungszähler irreversibel sind, wobei ihr Inhalt nicht zu einem früheren Inhalt oder sogar auf Null zurückkehren kann, wenn ihre maximale Kapazität erreicht worden ist.

5. Speicherkarte nach einem der Ansprüche 1 bis 4, dadurch **gekennzeichnet**, daß sie ein Identifikationsregister (RID) umfaßt, das eine Identifikationsnummer der Karte und ein Validationsregister (RVL) enthält, enthaltend einen Validationscode, der das Ergebnis eines Rechenalgorithmus ist, der zugleich in den Inhalt des ersten Registers und den Inhalt des Anweisungzählers einen Eingriff bewirkt, wobei das Validationsregister von außerhalb der Karte lesbar und nicht beschreibbar ist.

6. System zur Verarbeitung einer Speicherkarte nach Anspruch 5, umfassend Speicherkarten, Kartenlesegeräte verbunden mit Vorrichtungen zur Ausgabe von Produkten oder Dienstleistungen, sowie Maschinen zum erneuten Laden des Kredits für die Karten, dadurch **gekennzeichnet**, daß:
- die Maschinen zum erneuten Laden der Karten Mittel umfassen, um den Inhalt des Anweisungszählers der Karte um eine Größe wie Z+M Rest kleiner oder gleich N zu inkrementieren, wobei N die maximale Kapazität des Anweisungszählers darstellt,
- die Maschinen zum erneuten Laden Mittel zum Lesen des Inhalts des Identifikationsregisters der Karte umfassen, um einen Validationsalgorithmus ausgehend vom Inhalt des Identifikationsregisters und dem neuen Inhalt Z+M des Anweisungszählers durchzuführen und um das Ergebnis des Algorithmus in das Validationsregister der Karte zu schreiben,
- die Kartenlesegeräte Mittel umfassen, um den Inhalt des Anweisungszählers, des Validationsregisters und des Identifikationsregisters zu lesen, um die Kompatibilität dieser drei Inhalte abhängig vom verwendeten Validationsalgorithmus zu prüfen und um die Verwendung der Karte zu sperren, wenn eine Inkompatibilität erfaßt wird.

## Claims

1. Memory card serving as a means for the counting of units and organised to count up to N x P units organised in N pages of P units each, the card comprising a memory zone (MEM) of which each cell represents a counting of one unit, the card comprising a page counter (CPP) and an incrementation circuit (DET) internal to the card and serving to increment the page counter of a unit after each complete programming of a page of P cells, characterised in that it comprises a recording counter (CPC) of which the content represents a total credit of Z pages of units, and a comparator (COMP) serving to emit an end-of-credit signal when the contents of the page counter equal the content of the recording counter, which means that the said comparator emits the said end-of-credit signal when the page counter indicates that Z pages have been commenced, the recording counter being arranged to be incremented from outside the card.

2. Memory card according to claim 1, characterised in that the memory zone is erasable electrically and comprises one single page of P cells and that in the card an erasure circuit (EFF) is provided for the purpose of erasing the programming of the P cells when the P cells have been programmed and then incrementing the page counter, after which the programming of the cells can recommence.

3. Memory card according to claim 2, characterised in that the end-of-circuit signal is transmitted to outside the card and is also used to prevent the erasure of the programmed cells.

4. Memory card according to any one of claims 1 to 3, characterised in that the page counter and the recording counter are irreversible, their content being unable to return to a previous content or to zero even when their maximum capacity has been reached.

5. Memory card according to any one of claims 1 to 4, characterised in that it comprises an identification register (RID), containing an identification number of the card, and a validation register (RVL) containing a validation code which is the result of a calculation algorithm taking account both of the content of the first register and the content of the recording counter, the validation register being capable of being read and entered from outside the card.

6. System for the operation of a memory card according to claim 5, comprising memory cards, card readers associated product or service distribution installations, and credit recharging machines for the cards, characterised in that:
- the card recharging machines comprise means for incrementing the content of the recording counter of the card by a quantity M such that Z+M remains less than or equal to N, where N represents the maximum capacity of the recording counter,
- the recharging machines comprise means for reading the content of the identification register of the card, to produce a validation algorithm from the content of the identification register and from the new content Z+M of the recording counter and to write the result of the algorithm into the validation register of the card,
- the card readers comprise means for reading the content of the recording card, of the validation register and of the identification register, in order to verify the compatibility of these three contents as a function of the validation algorithm used and prevent the card from being used if any incompatibility is detected.
